# EUROPÄISCHE PATENTANMELDUNG

(11) **EP 1 471 504 A2**
(43) Veröffentlichungstag der Anmeldung: **27.10.2004**
(21) Anmeldenummer: 04009623.2
(22) Anmeldetag: 23.04.2004
(51) Int. Cl.: G10L 21/02

(54) **Verfahren und Vorrichtung zur Echokompensation bei Sprachsignalen**

(30) Priorität: 24.04.2003 DE 10318598
(71) Anmelder: Grundig Multimedia B.V., 1083HJ Amsterdam (NL)
(72) Erfinder: Tödtmann, Thorsten, Dr., 90537 Feucht (DE); Buchner, Herbert, 93152 Nittendorf (DE)
(74) Vertreter: Pröll, Jürgen

(57) **Zusammenfassung**

Die Erfindung betrifft eine Echokompensation bei Sprachsignalen. Ein von einem Echosignal überlagertes Sprachsignal wird von einem Mikrofon (5) aufgenommen. Das Ausgangssignal des Mikrofons wird einem Subtrahierer (6) zugeführt. In diesem wird ein in einem Digitalfilter (8) gefiltertes Lautsprechersignal (4) vom Ausgangssignal des Mikrofons subtrahiert, wobei das Digitalfilter einer Nachbildung der Raumimpulsantwort entspricht. Das Ausgangssignal des Mikrofons und das Lautsprechersignal werden einem Gegensprechdetektor (7) zugeführt, aus dessen Ausgangssignal die Koeffizienten des Digitalfilters ermittelt werden. In einem Zwischenspeicher werden zu zurückliegenden Zeitpunkten ermittelte Koeffizientensätze zwischengespeichert und beim Erkennen einer Gegensprechaktivität dem Digitalfilter zugeführt

## Beschreibung

Die Erfindung betrifft ein Verfahren und eine Vorrichtung zur Echokompensation bei Sprachsignalen.

Es ist bereits bekannt, zu einer Bedienung von Geräten eine Spracheingabe vorzunehmen. Beispielsweise kann eine derartige Spracheingabe zum Zwecke einer Navigation in einem auf einem Display angezeigten elektronischen Programmführer erfolgen. Um bei einer Spracheingabe, insbesondere einer freien Spracheingabe ohne Verwendung von Head-Sets, etc., eine möglichst hohe Worterkennungsrate zu erhalten, ist eine umfangreiche Signalvorverarbeitung erforderlich. Eine umfangreiche Signalvorverarbeitung ist weiterhin dann notwendig, wenn in einem Gegensprechsystem eine ausreichende Echounterdrückung erreicht werden soll.

Zur Rückgewinnung des eigentlichen Sprachsignals s(k) ist es notwendig, die durch das jeweils vorliegende System selbst generierten, dem Sprachsignal überlagerten Audiosignale, beispielsweise ein Fernsehtonsignal, ein Lautsprechersignal einer Stereoanlage oder ein Sprachsignal eines Gegensprechers, aus dem Mikrofonsignal so gut wie möglich wieder zu entfernen.

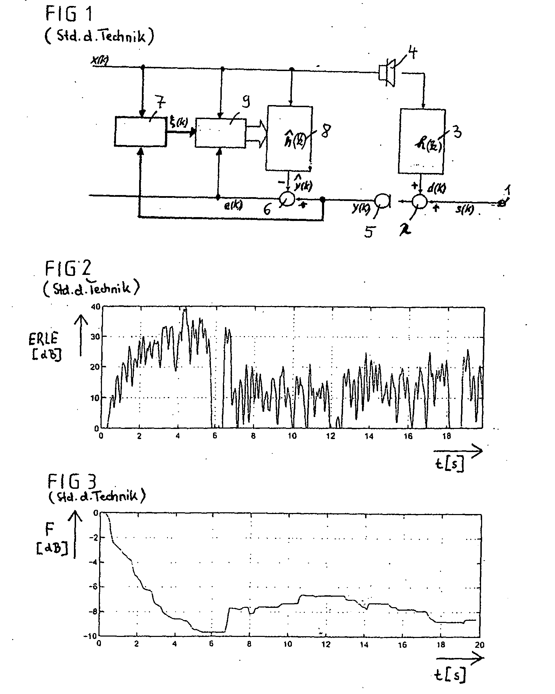

Die Figur 1 zeigt ein Blockschaltbild, in welchem die Grundstruktur einer bekannten Vorrichtung zur Echokompensation bei Sprachsignalen veranschaulicht ist.

Die in der Figur 1 dargestellte Vorrichtung weist einen Eingang 1 auf, an welchem ein Sprachsignal s(k) vorliegt. Dieses Sprachsignal wird von einem Echosignal d(k) beaufschlagt, welcher Vorgang durch den Addierer 2 veranschaulicht ist. Bei dem Echosignal d(k) handelt es sich um ein vom Lautsprecher 4 ausgestrahltes Signal, welches durch die Schallausbreitung im Raum verfälscht ist. Dies entspricht einer Filterung des vom Lautsprecher 4 abgestrahlten Signals mit der Impulsantwort h des Raumes, wobei diese Filterung in der Figur 1 durch einen Echopfad 3 dargestellt ist.

Um dieses Echosignal d(k) zu unterdrucken, wird die Impulsantwort des Raumes geschätzt. Dazu werden Adaptionsalgorithmen herangezogen, welche aus der Korrelation zwischen abgestrahltem Lautsprechersignal und dem am Ausgang des Mikrofons 5 vorliegenden Mikrofonsignal y(k) die Raumimpulsantwort permanent schätzen und diese Raumimpulsantwort bei Veränderungen nachführen. Veränderungen werden beispielsweise durch eine Bewegung von Personen im Raum hervorgerufen.

Das auszugebende Lautsprechersignal x(k) wird in einem Digitalfilter 8 mit der geschätzten Raumimpulsantwort ĥ(k) gefiltert, wodurch ein gefiltertes Lautsprechersignal ŷ(k) entsteht. Dieses wird in einem Subtrahierer 6 vom Mikrofonsignal y(k) subtrahiert. Stimmt die geschätzte Raumimpulsantwort ĥ(k) mit der Raumimpulsantwort h(k) überein, was bei einer exakten Schätzung der Raumimpulsantwort der Fall ist, dann enthält das am Ausgang des Subtrahierers 6 erhaltene Differenzsignal e(k) nur noch das Sprachsignal s(k).

Die Koeffizienten des Digitalfilters 8 werden in einer Koeffizientenermittlungseinheit 9 unter Verwendung eines Adaptionsalgorithmus ermittelt. Dieser Adaptionsalgorithmus wird vom Ausgangssignal ξ(k) eines Gegensprechdetektors 7 gesteuert.

Wird anhand des Ausgangssignals des Gegensprechdetektors 7 erkannt, dass ein Sprachsignal vorliegt, das von Null verschieden ist, dann wird der Zustand des Adaptionsalgorithmus eingefroren, da ansonsten das Sprachsignal den Adaptionsvorgang stören und somit eine Verschlechterung der geschätzten Raumimpulsantwort hervorrufen würde.

Ein dabei auftretendes Problem ist, dass die mittels des Gegensprechdetektors 7 durchgeführte Detektion der Sprecheraktivität selbst unsicher ist. Dies hat zur Folge, dass das Ausgangssignal ξ(k) des Gegensprechdetektors 7 in vielen Fällen zu spat anspricht. Dies wiederum bewirkt eine Verringerung der Gute der adaptierten Filterkoeffizienten, wodurch sich die geschätzte Raumimpulsantwort ĥ(k) bereits verschlechtert hat, bevor die Adaption bzw. die Neuberechnung der Filterkoeffizienten unterbrochen wird.

Dadurch wird zumeist gerade in der wichtigen Sprechsituation am Ausgang des Subtrahierers 6 ein Differenzsignal e(k) zur Verfügung gestellt, welches außer dem Sprachsignal s(k) unerwünschte große Echoanteile enthält.

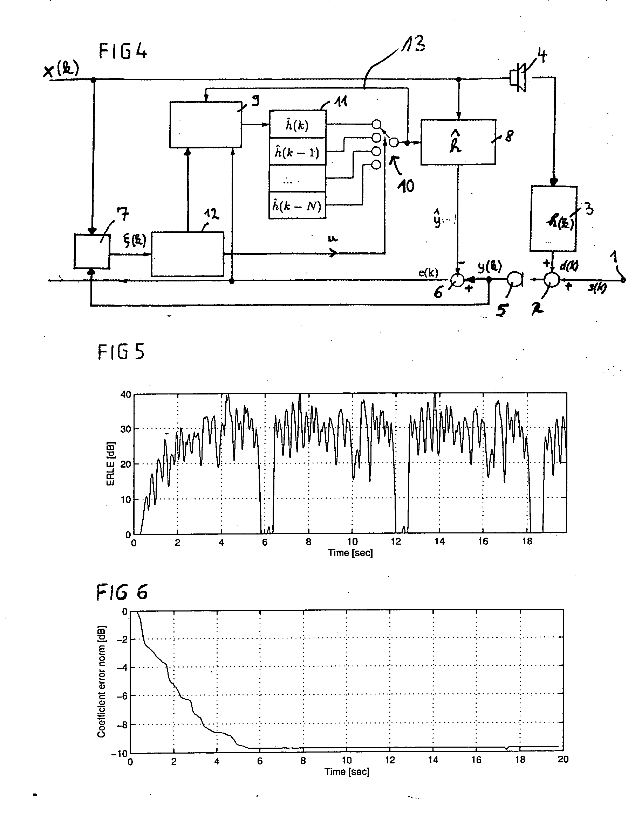

Dies ist in den Figuren 2 und 3 veranschaulicht. In der Figur 2 ist längs der Ordinate die Unterdrückung ERLE (=Echo Return Loss Enhancement) der Echoanteile im Ausgangssignal e(k) des Subtrahierers 6 in Dezibel und längs der Abszisse die Zeit t in Sekunden aufgetragen. Dabei ist der Rückgang des Signals ERLE auf 0dB bei t ≈ 6s auf eine Pause im Lautsprechersignal x(k) zurückzuführen. Bei t ≈ 7s ist eine einsetzende Sprecheraktivität zu erkennen. In der Figur 3 ist längs der Ordinate der Fehler F der geschätzten Filterkoeffizienten in Dezibel und längs der Abszisse die Zeit t in Sekunden aufgetragen. Insbesondere ist aus der Figur 3 ersichtlich, dass bei einsetzender Sprecheraktivität bei t ≈ 7s die Fehler der geschätzten Koeffizienten zunächst wieder größer werden und erst nach etwa 18s (Ende der Sprechaktivität) wieder eine deutliche Verbesserung der Güte der Koeffizienten vorliegt.

In praktischen Systemen wird oft eine Haltezeit T_{hold} verwendet, mit deren Hilfe die Adaption der Koeffizienten des digitalen Filters 8 nach dem Erkennen einer Gegensprechsituation vorerst unterbunden wird, obwohl das Ausgangssignal des Gegensprechdetektors 7 möglicherweise schon wieder eine Sprechpause signalisiert. Durch dieses Vorgehen werden Detektionsprobleme während einer Sprachäußerung und damit eine weitere Verschlechterung der geschätzten Raumimpulsantwort ĥ(k) vermieden.

Fehler, die zu Beginn der Sprachäußerung entstanden sind, werden dadurch aber nicht eliminiert und führen deshalb nach wie vor aufgrund einer länger andauernden fehlerhaften Schätzung der Raumimpulsantwort zu einer Vergrößerung des Differenzsignals e(k) um Werte in der Größenordnung von mehreren Dezibel.

Der Erfindung liegt die Aufgabe zugrunde, ein Verfahren und eine Vorrichtung anzugeben, bei denen die vorgenannten Nachteile nicht auftreten.

Diese Aufgabe wird durch ein Verfahren mit den im Anspruch 1 angegebenen Merkmalen sowie durch eine Vorrichtung mit den im Anspruch 5 angegebenen Merkmalen gelöst. Vorteilhafte Ausgestaltungen und Weiterbildungen der Erfindung ergeben sich aus den abhängigen Patentansprüchen.

Die Vorteile der Erfindung bestehen insbesondere darin, dass die geschätzte Raumimpulsantwort besser an die tatsächlich vorliegende Raumimpulsantwort angenähert ist als beim Stand der Technik, was zu einer Verbesserung des Signal-Rausch-Verhältnisses des Ausgangssignals führt. Die Erfindung eignet sich sowohl für Systeme, die auf Blockbasis arbeiten, als auch für Systeme, die pro Abtastwert adaptieren. Die genannten Vorteile werden dadurch erreicht, dass verhindert wird, dass eine fälschlicherweise während des Einsetzens einer Gegensprechaktivität "in die falsche Richtung" adaptierte Impulsantwort über einen längeren Zeitraum das Ausgangssignal e(k) verschlechtert.

Weitere vorteilhafte Eigenschaften der Erfindung ergeben sich aus deren beispielhafter Erläuterung anhand der Figuren. Es zeigt
- Figur 1: eine Blockdarstellung einer bekannten Vorrichtung zur Echokompensation bei Sprachsignalen,
- Figur 2: ein Diagramm zur Veranschaulichung der Unterdrückung der Echoanteile im Ausgangssignal bei Verwendung der bekannten Vorrichtung gemäß Figur 1,
- Figur 3: ein Diagramm zur Veranschaulichung der Fehler der geschätzten Filterkoeffizienten bei Verwendung der bekannten Vorrichtung gemäß Figur 1,
- Figur 4: eine Blockdarstellung einer Vorrichtung gemäß der Erfindung zur Echokompensation bei Sprachsignalen,
- Figur 5: ein Diagramm zur Veranschaulichung der Unterdrückung der Echoanteile im Ausgangssignal bei Verwendung der erfindungsgemäßen Vorrichtung gemäß Figur 4 und
- Figur 6: ein Diagramm zur Veranschaulichung der Fehler der geschätzten Filterkoeffizienten bei Verwendung der erfindungsgemäßen Vorrichtung gemäß Figur 4.

Die Figur 4 zeigt eine Blockdarstellung einer Vorrichtung gemäß der Erfindung zur Echokompensation bei Sprachsignalen.

Die in der Figur 4 dargestellte Vorrichtung weist einen Eingang 1 auf, an welchem ein Sprachsignal s(k) vorliegt. Dieses Sprachsignal wird von einem Echosignal d(k) beaufschlagt, welcher Vorgang durch den Addierer 2 veranschaulicht ist. Bei dem Echosignal d(k) handelt es sich um ein vom Lautsprecher 4 abgestrahltes Signal, welches durch die Schallausbreitung im Raum verfälscht ist. Dies entspricht einer Filterung des vom Lautsprecher 4 abgestrahlten Signals mit der Impulsantwort h(k) des Raumes, wobei diese Filterung in der Figur 4 durch den Echopfad 3 dargestellt ist.

Um dieses Echosignal d(k) zu unterdrücken, wird die Impulsantwort des Raumes im Rahmen einer Schätzung ermittelt. Dazu werden Adaptionsalgorithmen herangezogen, welche aus der Korrelation zwischen abgestrahltem Lautsprechersignal und dem am Ausgang des Mikrofons 5 vorliegenden Mikrofonsignal y(k) die Raumimpulsantwort h(k) permanent schätzen und diese geschätzte Raumimpulsantwort h(k) bei Veränderungen nachführen. Veränderungen werden beispielsweise durch eine Bewegung von Personen im Raum hervorgerufen.

Das auszugebende Lautsprechersignal x(k) wird in einem Digitalfilter 8 mit einer geschätzten Raumimpulsantwort ĥ gefiltert, wodurch ein gefiltertes Lautsprechersignal ŷ entsteht. Dieses wird in einem Subtrahierer 6 vom Mikrofonsignal y(k) subtrahiert. Stimmt die geschätzte Raumimpulsantwort ĥ mit der Raumimpulsantwort h(k) uberein, was bei einer exakten Schätzung der Raumimpulsantwort der Fall ist, dann enthält das am Ausgang des Subtrahierers 6 erhaltene Differenzsignal e(k) nur noch das Sprachsignal s(k).

Die Koeffizienten des Digitalfilters 8 werden in einer Koeffizientenermittlungseinheit 9 unter Verwendung eines Adaptionsalgorithmus ermittelt. Dieser Adaptionsalgorithmus wird vom Ausgangssignal ξ(k) eines Gegensprechdetektors 7 gesteuert.

Wird anhand des Ausgangssignals des Gegensprechdetektors 7 erkannt, dass ein Sprachsignal vorliegt, das von Null verschieden ist, dann wird der Zustand des Adaptionsalgorithmus eingefroren, da ansonsten das Sprachsignal den Adaptionsvorgang stören und somit eine Verschlechterung der geschätzten Raumimpulsantwort auftreten würde.

Auch bei der in der Figur 4 dargestellten Vorrichtung wird eine Haltezeit T_{hold} verwendet, mit deren Hilfe die Adaption der Koeffizienten des digitalen Filters 8 nach dem Erkennen einer Gegensprechsituation vorerst unterbunden wird.

Im Unterschied zu der in der Figur 1 gezeigten Vorrichtung werden mittels der in der Figur 4 gezeigten Vorrichtung auch diejenigen Fehler, die zu Beginn der Sprachäußerung entstanden sind, kompensiert. Dies geschieht dadurch, dass auf einen um n Abtastwerte zurückliegenden Koeffizientensatz ĥ(k - n) zurückgeschaltet wird. Um dies zu ermöglichen, ist bei der in der Figur 4 gezeigten Vorrichtung ein Koeffizientenspeicher 11 vorgesehen, in welchem die den zurückliegend geschätzten Raumimpulsantworten ĥ(k), ĥ(k -1), ...,
ĥ(k - n) entsprechenden Koeffizientensätze abgespeichert sind. Jeder dieser Koeffizientensätze kann über eine Schalteinheit 10 dem digitalen Filter 8 zugeleitet werden.

Die Steuerung der Schalteinheit 10 erfolgt durch Umschaltsignale u, die von einer Rücksprungsteuerung 12 zur Verfügung gestellt werden. Der Rücksprungsteuerung 12 werden eingangsseitig die Ausgangssignale ξ(k) des Gegensprechdetektors 7 zugeführt. Wird anhand der Ausgangssignale des Gegensprechdetektors 7 das Einsetzen einer Gegensprechaktivität erkannt, dann wird diese Information von der Rücksprungsteuerung 12 an die Koeffizientenermittlungseinheit 9 weitergegeben. Ferner stellt die Rücksprungsteuerung 12 als Reaktion auf das Einsetzen einer Gegensprechaktivität auch die bereits genannten Umschaltsignale u für die Umschalteinheit 10 zur Verfügung.

Der jeweils ausgewählte Koeffizientensatz, der am Eingang des digitalen Filters 8 anliegt, wird über einen Rückkopplungspfad 13 an die Koeffizientenermittlungseinheit 9 zurückgeführt. Dies geschieht zum Zwecke einer Neuinitialisierung des Adaptionsalgorithmus nach einer Detektion einer Gegensprechaktivität.

Durch diese Maßnahmen wird vermieden, dass die durch die unsichere und damit oftmals verspätete Erkennung einer Gegensprechaktivität verschlechterte Schätzung der Raumimpulsantwort über einen längeren Zeitraum verwendet wird. Stattdessen wird auf einen Koeffizientensatz zurückgegriffen, der mit großer Wahrscheinlichkeit nahe vor dem Einsetzen des Sprachsignals, keinesfalls aber während einer früheren Sprachäußerung, ermittelt wurde.

Eine vorteilhafte Weiterbildung der Erfindung besteht darin, in Systemen, bei denen größere Signalverzögerungen im Echokompensator akzeptabel sind, das durch eine bereits fehladaptierte Raumimpulsantwort unnötig verschlechterte Ausgangssignal e(k) erneut zu generieren. Systeme, bei denen größere Signalverzögerungen im Echokompensator akzeptabel sind, sind beispielsweise Systeme mit nachgeschalteten Spracherkennungsvorrichtungen Denn derartige Spracherkennungsvorrichtungen benötigen selbst vergleichsweise viel Rechenzeit, ehe eine Ausgabe der erkannten Worthypothesen erfolgen kann.

Um diese erneute Generierung des Ausgangssignals e(k) zur ermöglichen, ist die in der Figur 4 dargestellte Vorrichtung mit zusätzlichen Speichermitteln auszustatten, in denen die Signale x(k), y(k) und e(k) ebenfalls über einen längeren Zeitraum zwischengespeichert werden können.

Im Falle einer Gegensprechdetektion kann dann das zunächst mit einer schlecht adaptierten Impulsantwort gefilterte Signal x(k) ein zweites Mal verarbeitet und vom ebenfalls zwischengespeicherten Mikrofonsignal y(k) erneut im Subtrahierer 6 subtrahiert werden. Das vom Subtrahierer 6 ermittelte Differenzsignal wird dazu verwendet, ab einer vorbestimmten Position im Zwischenspeicher der Signale e(k) die zunächst unter ungünstigen Bedingungen ermittelten Werte des Signals e(k) zu ersetzen.

Liegt eine ausreichende Restkapazität im System vor, dann kann die bei der vorstehend beschriebenen vorteilhaften Weiterbildung benötigte zusätzliche Rechenzeit durch ein in der nachfolgenden Zeit schnelleres Abarbeiten des zwischengespeicherten Eingangssignals wieder kompensiert werden.

In Systemen, bei denen nur ein Ausgangssignal e(k) von Interesse ist, das auch ein Sprachsignal enthalt, ist es aber auch möglich, den bzw. die Zwischenspeicher in den auftretenden Sprechpausen zu leeren. Derartige Systeme sind beispielsweise Systeme, die eine Spracherkennungsvorrichtung aufweisen. Durch die genannte Leerung des bzw. der Zwischenspeicher in Sprechpausen wird der Zeitbezug im Ausgangssignal verändert. Dies kann aber, sofern es erforderlich ist, in der nachfolgenden Stufe berücksichtigt werden, indem von der Rücksprungsteuerung 12 zusätzliche Zeitstempel generiert werden.

Die mittels einer Vorrichtung gemaß der Erfindung erzielbaren Vorteile sind in den Figuren 5 und 6 veranschaulicht.

In der Figur 5 ist längs der Ordinate die Unterdrückung ERLE (=Echo Return Loss Enhancement) der Echoanteile im Ausgangssignal e(k) des Subtrahierers 6 in Dezibel und längs der Abszisse die Zeit t in Sekunden aufgetragen. Dabei ist der Ruckgang des Signals ERLE auf 0dB bei t ≈ 6s auf eine Pause im Lautsprechersignal x(k) zurückzuführen. Bei t ≈ 7s ist eine einsetzende Sprecheraktivität zu erkennen. In der Figur 6 ist längs der Ordinate der Fehler F der geschätzten Filterkoeffizienten in Dezibel und längs der Abszisse die Zeit t in Sekunden aufgetragen. Die Figur 5 zeigt die bei der Erfindung im Unterschied zu Figur 2 vorliegende bessere Unterdrückung der Echoanteile im Ausgangssignal. Aus der Figur 6 ist ersichtlich, dass bei einsetzender Sprecheraktivität bei t ≈ 7s im Unterschied zu Figur 3 kein Anstieg der Fehler der geschätzten Koeffizienten vorliegt.

### Bezugszeichenliste

- 1: Eingangsanschluss
- 2: Addierer
- 3: Echopfad
- 4: Lautsprecher
- 5: Mikrofon
- 6: Subtrahierer
- 7: Gegensprechdetektor
- 8: Digitalfilter
- 9: Koeffizientenermittlungseinheit
- 10: Schalteinheit
- 11: Koeffizientenspeicher
- 12: Rücksprungsteuerung
- 13: Rückkopplungspfad

- d(k): Echosignal
- e(k): Differenzsignal
- h(k): Raumimpulsantwort
- ĥ(k): geschätzte Raumimpulsantwort
- n(k): Störgeräusche
- s(k): Sprachsignal
- u: Umschaltsignal
- x(k): Lautsprechersignal
- y(k): Mikrofonsignal
- ŷ(k): gefiltertes Lautsprechersignal
- ξ(k): Ausgangssignal des Gegensprechdetektors 7
- ERLE: Unterdrückung der Echoanteile im Ausgangssignal
- F: Koeffizientenfehler

## Patentansprüche

1. Verfahren zur Echokompensation bei Sprachsignalen, bei welchem
- ein von einem Echosignal überlagertes Sprachsignal von mindestens einem Mikrofon aufgenommen wird,
- das Ausgangssignal des Mikrofons einem Subtrahierer zugeführt wird, in welchem ein in einem Digitalfilter gefiltertes Lautsprechersignal vom Ausgangssignal des Mikrofons subtrahiert wird, wobei das Digitalfilter einer Nachbildung der Raumimpulsantwort entspricht,
- das Ausgangssignal des Mikrofons und das Lautsprechersignal einem Gegensprechdetektor zugeführt werden, und
- das Ausgangssignal des Gegensprechdetektors eine Koeffizientenermittlungseinheit steuert, in welcher die Koeffizienten des Digitalfilters ermittelt werden,
**dadurch gekennzeichnet, dass**
- in einer zwischen der Koeffizientenermittlungseinheit (9) und dem Digitalfilter (8) angeordneten Speichereinheit (11) zu unterschiedlichen Zeitpunkten ermittelte Koeffizientensätze (ĥ(k),ĥ(k-1 ),...,ĥ(k-n)) abgespeichert werden und
- beim Erkennen einer Gegensprechaktivität ein zeitlich zurückliegender Koeffizientensatz dem Digitalfilter (8) zugeführt wird.

2. Verfahren nach Anspruch 1,
**dadurch gekennzeichnet, dass**
die Umschaltung zwischen verschiedenen Koeffizientensätzen von einem Umschaltsignal (u) gesteuert wird, welches als Reaktion auf die Erkennung des Einsetzens einer Gegensprechaktivität erzeugt wird.

3. Verfahren nach Anspruch 1 oder 2,
**dadurch gekennzeichnet, dass**
der dem Digitalfilter (8) zugeführte Koeffizientensatz an die Koeffizientenermittlungseinheit (9) zurückgeführt wird.

4. Verfahren nach einem der vorhergehenden Ansprüche,
**dadurch gekennzeichnet, dass**
das Ausgangssignal des Subtrahierers (6) in einer weiteren Speichereinheit zwischengespeichert wird und das zwischengespeicherte Ausgangssignal des Subtrahierers durch ein zu einem späteren Zeitpunkt ermitteltes Ausgangssignal des Subtrahierers ersetzt wird.

5. Vorrichtung zur Echokompensation bei Sprachsignalen, mit
- einem Mikrofon, welches zur Aufnahme eines von einem Echosignal überlagerten Sprachsignals vorgesehen ist,
- einem zur Nachbildung der Raumimpulsantwort vorgesehenen Digitalfilter,
- einem Subtrahierer, in welchem das Ausgangssignal des Digitalfilters vom Ausgangsignal des Mikrofons subtrahiert wird,
- einem Gegensprechdetektor, welchem das Ausgangssignal des Mikrofons und ein Lautsprechersignal zugeführt sind und
- einer Koeffizientenermittlungseinheit, welcher das Ausgangssignal des Gegensprechdetektors zugeführt ist,
**dadurch gekennzeichnet, dass** sie weiterhin
- zwischen der Koeffizientenermittlungseinheit (9) und dem Digitalfilter (8) einen Zwischenspeicher (11) aufweist, welcher zur Abspeicherung von zu unterschiedlichen Zeitpunkten ermittelten Koeffizientensätzen (ĥ(k),ĥ(k-1),...,ĥ(k-n)) vorgesehen ist, und dass sie
- Auswahlmittel (10,12) umfasst, mittels derer beim Erkennen einer Gegensprechaktivität ein zeitlich zurückliegender Koeffizientensatz an das Digitalfilter (8) geleitet wird.

6. Vorrichtung nach Anspruch 5,
**dadurch gekennzeichnet, dass**
sie einen Rückkopplungspfad (13) aufweist, über welchen der von den Auswahlmitteln (10,12) an das Digitalfilter (8) geleitete Koeffizientensatz an die Koeffizientenermittlungseinheit (9) zurückgeführt wird.

7. Vorrichtung nach Anspruch 5 oder 6,
**dadurch gekennzeichnet, dass**
die Auswahlmittel eine Rücksprungsteuerung (12) umfassen, die mit dem Ausgang des Gegensprechdetektors (7) verbunden ist.

8. Vorrichtung nach einem der Ansprüche 5 bis 7,
**dadurch gekennzeichnet, dass**
die Auswahlmittel eine Schalteinheit (10) umfassen, die zwischen dem Zwischenspeicher (11) und dem Digitalfilter (8) angeordnet ist.

9. Vorrichtung nach Anspruch 8,
**dadurch gekennzeichnet, dass**
die Rücksprungsteuerung (12) Schaltsignale (u) für die Schalteinheit (10) zur Verfügung stellt.

10. Vorrichtung nach einem der Ansprüche 5 bis 9,
**dadurch gekennzeichnet, dass**
die Vorrichtung einen weiteren Zwischenspeicher aufweist, in welchem das Ausgangssignal des Subtrahierers (6) zwischengespeichert wird.

11. Vorrichtung nach der Anspruch 10,
**dadurch gekennzeichnet, dass**
die Vorrichtung zusätzlich das Lautsprechersignal (4) und das Mikrofonsignal (5) im weiteren Zwischenspeicher zwischenspeichert.

12. Vorrichtung nach Anspruch 10 oder 11,
**dadurch gekennzeichnet, dass**
die Vorrichtung Mittel umfasst, die zum Ersatz des zwischengespeicherten Ausgangssignals des Subtrahierers durch ein zu einem späteren Zeitpunkt ermitteltes Ausgangssignal des Subtrahierers vorgesehen sind.
